Europäisches Patentamt

European Patent Office

Office européen des brevets

(11) Publication number: **0 170 630**
**B1**

# (12) EUROPEAN PATENT SPECIFICATION

(45) Date of publication of patent specification: **08.03.89**

(51) Int. Cl.⁴: **G 05 G 5/10**

(21) Application number: **85830150.0**

(22) Date of filing: **17.06.85**

(54) Gearbox control device for motor vehicles.

(30) Priority: **11.07.84 IT 5363384 u**

(43) Date of publication of application:
**05.02.86 Bulletin 86/06**

(45) Publication of the grant of the patent:
**08.03.89 Bulletin 89/10**

(84) Designated Contracting States:
**DE FR GB**

(56) References cited:
**EP-A-0 025 734**
**EP-A-0 078 047**
**AU-A- 59 777**
**FR-A-2 236 228**
**FR-A-2 280 933**
**FR-A-2 299 562**
**US-A-4 277 983**

(73) Proprietor: **FIAT AUTO S.p.A.**
**Corso Giovanni Agnelli 200**
**I-10135 Torino (IT)**

(72) Inventor: **Nepote, Luciano**
**Via Genova 29**
**I-10076 Nole Canavese (Torino) (IT)**

(74) Representative: **Notaro, Giancarlo et al**
**c/o Jacobacci-Casetta & Perani S.p.A. Via Alfieri, 17**
**I-10121 Torino (IT)**

Courier Press, Leamington Spa, England.

## Description

The present invention relates to a gearbox control device for motor vehicles, of the type defined in the pre-characterising clause of the attached Claim 1.

A device of the above mentioned type is disclosed by FR-A-2 236 228. In this prior art device, the auxiliary element is provided with two separate check elements which respectively perform the function of locking the auxiliary element on the first selection rod during the insertion of the reverse gear and the function of locking the auxiliary element to the adjacent second selection rod during the insertion of the highest gear.

In another known solution (FR-A-2 280 933) the auxiliary element is locked onto the first selection rod when the latter is moved towards its operative end position corresponding to the engagement of a highest gear, and abuts against a stop surface when the first selection rod is moved towards its other operative position corresponding to the reserve gear. However, no means are provided to lock the auxiliary element in a fixed axial position in respect of the gearbox housing.

The object of the present invention is to provide a control device of the mentioned type which is more simple and reliable with respect to the prior art devices and which enables a gearbox housing of reduced size to be achieved.

According to the invention, this object is achieved by providing a control device as set forth in the appended Claim 1.

In the device according to the invention a single check element is provided which performs both the abovementioned locking functions. During the insertion of the reverse gear, the check element is held in engagement into a reference notch on the first selection rod as a result of its sliding contact with the surface of the second adjacent selection rod. On the other hand, when the first selection rod is urged towards its operative end position corresponding to the insertion of the highest gear, a stop surface provided on the gearbox housing prevents further movement of the auxiliary element. In this condition, the check element is received within a seat in the second adjacent selection rod, thereby allowing free sliding of the first selection rod and locking simultaneously the auxiliary element onto the second adjacent selection rod.

Further features and advantages of the invention are illustrated in the following description which is made with reference to the attached drawings, given purely by way of non-limiting example, in which:

Fig. 1 is a sectional view of a device of the invention, and

Fig. 2 is a sectional view along the line II-II of Fig. 1.

In the drawings, the reference numeral 1 indicates an overall gearbox control device for motor vehicles. The control device 1 is disposed within the gearbox housing 2.

The gearbox construction with which the device 1 is associated is not shown in the drawings as it is of conventional type. The gearing comprises in particular a series of gear pairs which are constantly in engagement and synchronization devices for the control of the insertion of the various gears.

In the example illustrated, the gearbox comprises five gears for forward movement and one gear for reverse movement.

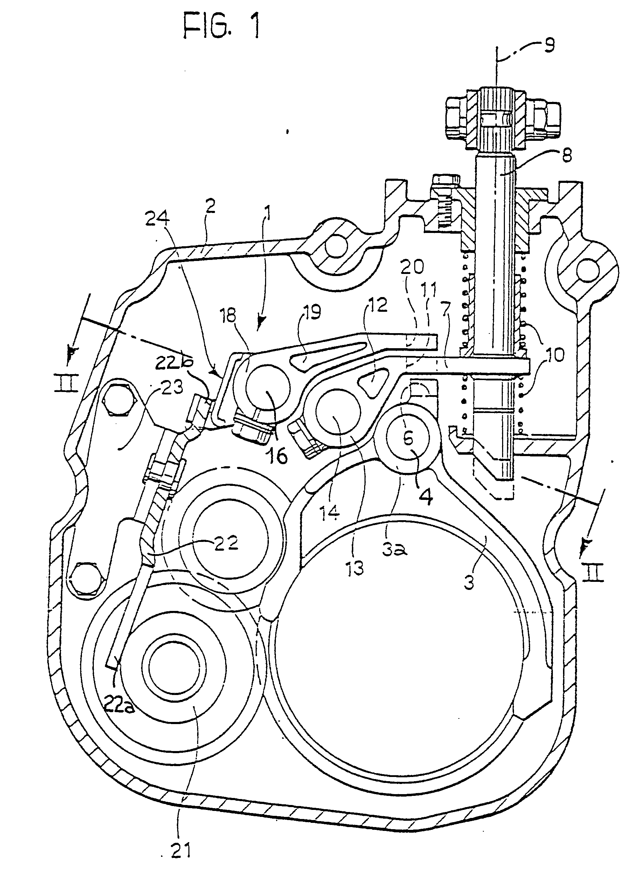

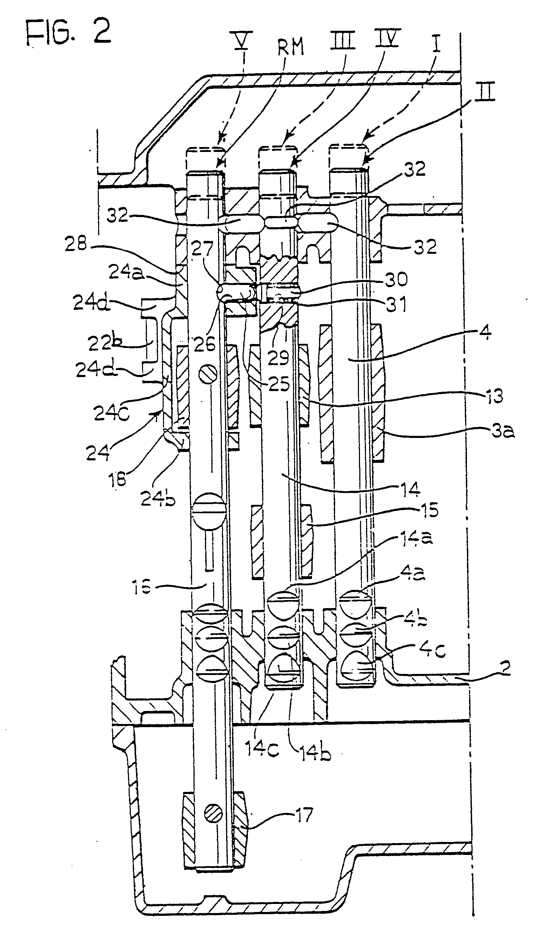

The synchronization devices which control the insertion of these gears are controlled, in a manner known per se, by forks, one of which is shown at 3 in Fig. 1. The fork 3 is designed to control the insertion of the first and second gears and has a hub 3a (see also Fig. 2) fixed on a selection rod 4 which is slidably mounted in the gearbox housing 2. In accordance with conventional techniques, the selection rod 4 may assume an operative end position, shown by the dashed line I on Fig. 2 corresponding to the insertion of the first gear, a second operative end position, shown by the dashed line II on Fig. 2, corresponding to the insertion of the second gear and a central neutral position. The selection rod 4 is also provided in a manner known per se, with three reference notches 4a, 4b, 4c designed to cooperate with a spherical element or the like urged resiliently against the selection rod 4 in order to enable the snap locking of this rod in each of the said three positions.

The hub 3a of the fork 3 which is fixed on the selection rod 4 is provided with a lug projection 5 having a slot 6 designed to receive a finger 7 which projects radially from a control shaft 8 mounted to rotate about its geometrical axis 9 in the gearbox housing 2. The control shaft 8 is also mounted in an axially slidable manner in the gearbox housing 2 and is returned by springs 10 to its neutral position shown in Fig. 1. In this position, the finger 7 is taken up in a slot 11 of a lug projection 12 provided on a hub 13 which is fixed on a selection rod 14 for controlling the insertion of the third and fourth gears. On the selection rod 14 there is fixed a hub 15 of a fork (not shown) designed to control the synchronization device for the insertion of the third and fourth gears. In a similar manner to the selection rod 4, the selection rod 14 has two operative end positions, shown by the dashed lines III and IV and Fig. 2, corresponding respectively to the insertion of the third and the fourth gear and an intermediate neutral position, the said three positions being defined by the engagement of spherical element or the like urged resiliently against the selection rod 14 in one of the three reference notches 14a, 14b, 14c with which said rod 14 is provided.

The gearbox control device 1 comprises a third selection rod 16, mounted slidably in the gearbox housing 2, on which rod there is fixed a sleeve 17 forming part of a fork (not shown) for controlling the insertion of the fifth gear. On the selection rod 1 there is also fixed a hub 18 provided with a lug projection 19 (see Fig. 1) whose free end has a slot 20 designed to cooperate with the finger 7.

The selection rod 16 also has a first operative end position, shown by the dashed line V on Fig. 2, corresponding to the insertion of the fifth gear, a second operative end position, shown by the dashed line RM on Fig. 2, corresponding to the insertion of the reverse gear and an intermediate neutral position.

When the three selection rods 4, 14, 16 are all in their neutral positions, the slots 6, 11, 20 are aligned, as a result of which it is possible to bring the finger 7 into selective engagement within any one of these slots by means of an axial displacement of the control shaft 8. A subsequent rotation of the control shaft 8 about its axis 9 leads, by the cooperation of the finger 7 with the selected slot, to an axial displacement of that rod which is connected to said selected slot.

The insertion of the reverse gear is obtained, in a conventional manner, by means of the axial displacement of a gear 21. This axial displacement is controlled by a fist free end 22a of a rocker lever 22 mounted in an articulated manner about an axis 23 on the housing 2 of the gearbox and having its second free end 22b engaged, for cooperation therewith, between two projections 24d provided on an auxiliary element 24 which is mounted in a freely slidable manner on the selection rod 16.

In the example illustrated, the auxiliary element 24 has, in particular, two end portions 24a, 24b mounted slidably on the selection rod 16 and connected together by a spacer wall 24c. The auxiliary element 24 is also provided with the above mentioned two projections 24d between which is engaged the abovementioned free end 22b of the rocker lever 22 which may hence cooperate with the auxiliary element 24.

One-way locking means are provided to keep the auxiliary element 24 locked on the selection rod 16, when the latter is displaced between its neutral position and its operative end position RM corresponding to the insertion of the reverse gear, and to enable, on the contrary, the free sliding of the selection rod 16 with respect to the auxiliary element 24, when this rod is displaced between its neutral position and its operative end position V corresponding to the insertion of the fifth gear.

In the example illustrated, these one-way locking means comprise a pin 25 mounted slidably in a through radial hole 26 provided in the end portion 24a of the auxiliary element 24 and designed to cooperate with a reference notch 27 provided on the surface of the selection rod 16.

When the selection rod 16 is displaced between its neutral position (shown in solid line on Fig. 2) and its operative end position RM corresponding to the insertion of the reverse gear, one end of the pin 25, facing the adjacent selection rod 14, slides on the outer surface of this rod. In this way, the said surface of the adjacent selection rod 14 maintains the pin 25 engaged into the reference notch 27; as a result thereof the auxiliary element 24 is locked on and may be displaced together with the selection rod 16 causing the insertion and release of the reverse gear through the cooperating rocker lever 22.

When the rod selection 16 is urged from its neutral position in the direction of its operative end position V corresponding to the insertion of the fifth gear, the end portion 24a of the auxiliary element 24 abuts against a stop surface 28 defined by the gearbox housing 2, as a result of which the latter prevents further displacement of the auxiliary element 24 in said direction.

The adjacent selection rod 14 has a seat 29 corresponding to the position assumed by the pin 25 when the selection rod 16 is in its neutral position. Within the seat 29 there is disposed a sensor element 30 urged by a spring 31 in the direction of said selection rod 16.

When the selection rod 16 is urged, from its neutral position, in the direction of its operative end position corresponding to the insertion of the fifth gear, this action is not accompanied by a corresponding displacement of the auxiliary element 24 since the latter, as mentioned above, abuts against the stop surface 28. A further displacement, in the abovementioned direction, of the selection rod 16 causes, however, a disengagement of the pin 25 from the reference notch 27. The pin 25 is therefore urged radially outwardly, with respect to the axis of the selection rod 16, and is partially taken up within the seat 29 following a retraction of the sensor element 30 and a compression of the spring 31. Hence the said disengagement of pin 25 from the reference notch 27 and the partial insertion of the same pin 25 into the said seat 29 take place simultaneously. During the effective further displacement of the selection rod 16, from its neutral position to its first operative end position V corresponding to the insertion of the fifth gear, the pin 25 acts as an interlocking element between the auxiliary element 24 and the selection rod 14. Since, during this stage, said selection rod 14 is locked in a fixed axial position (since the device has, in a manner known per se, a series of pins 32 cooperating with corresponding notches provided on the selection rods 4, 14, 16 such that when one of the selection rods 4, 14, 16 is axially displaced, the others are locked in position), the auxiliary element 24 is therefore locked in a fixed position with respect to the gearbox structure and housing.

As it clearly emerges from the preceding description, the disclosed control device has a single selection rod 16 for controlling the insertion of the reverse and the fifth gears. The insertion of the reverse gear is controlled by the auxiliary element 24 which is displaced together with said selection rod 16 when the latter moves between its neutral position and its operative end position RM corresponding to the insertion of the reverse gear, whilst it remains locked in a fixed axial position when the same selection rod 16 is displaced between its neutral position and its operative end position V corresponding to the insertion of the fifth gear.

According to the invention the locking of the auxiliary element 24 on the selection rod 16, with respect to a single direction of movement of said rod, is obtained by means of the pin 25 which is also used for locking the auxiliary element 24 in a fixed axial position during the insertion and release of the fifth gear.

Obviously, whilst the technical principle of the invention remains unchanged, the structural details may be greatly varied with respect to the details given above purely by way of example.

**Claims**

1. A gearbox control device (1) for motor vehicles, comprising:
   - a gearbox housing (2)
   - a first selection rod (16) for the selective control of the insertion of a highest gear and a reverse gear, this selection rod (16) being axially displaceable between a first operative end position (V) corresponding to the insertion of the highest gear, and a second operative end position (RM) corresponding to the insertion of the reverse gear, and also having an intermediate neutral position between said two operative end positions (V, RM),
   - a shifting fork for controlling the insertion of the highest gear, whose sleeve (17) is fixed on the said selection rod (16),
   - an auxiliary element (24) for controlling the insertion of the reverse gear, mounted in a freely slidable manner on the said first selection rod (16),
   - one-way locking means (25, 26, 27, 28, 29, 31) to lock the auxiliary element (24) in a fixed axial position on the said first selection rod (16) when the latter is displaced between its neutral position and its second operative end position (RM), and to lock the auxiliary element (24) in a fixed axial position in respect of a second adjacent selection rod (14) of the gearbox, allowing, at the same time, a free sliding of the first selection rod (16) relative to the auxiliary element (24) when said first selection rod (16) is displaced between its neutral position and its first operative end position (V), characterized in that:
   a) said one-way locking means comprise a single check element (25) slidably mounted within a transverse through hole (26) provided in the body of the auxiliary element (24) and having a first end in sliding contact with the surface of said second adjacent selection rod (14), so that a second opposite end of said check element (25) is held into engagement into a reference notch (27) provided on the surface of the first selection rod (16) in order to maintain the auxiliary element (24) locked on said first selection rod (16) when the latter is moved between its neutral and its second operative end position (RM),
   b) the gearbox housing (2) provides for a stop surface (28) against which abuts the auxiliary element (24) when the first selection rod (16) is in its neutral position; said stop surface (28) being such that it prevents the auxiliary element (24)

from moving solidly with the first selection rod (16), when this latter is urged, from its neutral position, towards its first operative end position (V),
   c) said second adjacent selection rod (14) has a seat (29) which, when the first selection rod (16) is in its neutral position, faces the check element (25) and resilient means (31) are provided within said seat (29) to urge said check element (25) against said first selection rod (16); said seat (29) and said resilient means (31) being arranged in such a way that, when said first selection rod (16) is urged fron its neutral position towards its first operative end position (V), they enable simultaneously:
   c1) the said check element (25) to be disengaged from said reference notch (27) provided in said first selection rod (16), thereby allowing this latter to be effectively displaced from its neutral position to its first operative end position (V), and
   c2) the same said check element (25) to be partially inserted into said seat (29), thereby locking the auxiliary element (24) onto the second adjacent selection rod (14) in said fixed axial position.

2. A device as claimed in Claim 1, characterized in that an element (30) is slidably mounted within said seat (26) and is urged by said resilient means (31) towards the first rod (16).

**Patentansprüche**

1. Steuervorrichtung (1) für Kraftfahrzeug-Schaltgetriebe
   mit einem Getriebegehäuse (2),
   mit einer ersten Schaltstange (16) für das wahlweise Einlegen des größten Gangs und des Rückwärtsgangs, die (16) axial verschiebbar ist zwischen einer dem Einlegen des größten Gangs entsprechenden ersten wirksamen Endstellung (V) und einer dem Einlegen des Rückwärtsgangs entsprechenden zweiten wirksamen Endposition (RM) und die (16) ferner eine zwischen den beiden wirksamen Endstellungen (V, RM) liegende neutrale Zwischenstellung hat,
   mit einer Schaltgabel für das Einlegen des größten Gangs, deren Muffe (17) an der genannten Schaltstange (16) befestigt ist,
   mit einem Hilfselement (24) für das Einrücken des Rückwärtsgangs, das auf der ersten Schaltstange frei gleitend (16) montiert ist,
   sowie mit in einer Richtung wirkenden Blockierungsmitteln (25, 26, 27, 28, 29, 31) zum Blockieren des Hilfselements (24) in einer festen axialen Position auf der ersten Schaltstange (16), wenn letztere zwischen ihrer neutralen Zwischenstellung und ihrer zweiten wirksamen Endstellung (RM) verschoben wird, und zum Blockieren des Hilfselements (24) in einer relativ zu einer zweiten benachbarten Schaltstange (14) des Getriebes festen axialen Position, wobei diese Blockierungsmittel gleichzeitig ein freies Gleiten der ersten Schaltstange (16) relativ zu dem Hilfselement (Z4) erlauben, wenn die erste Schaltstange (16) zwischen ihrer neutralen Zwischenstellung und ihrer ersten wirksamen Endstellung (V) verschoben wird, dadurch gekennzeichnet, daß

a) die in einer Richtung wirksamen Blockierungsmittel ein einzelnes Prüfelement (25) umfassen, das in einer durchgehenden Querbohrung (26) des Körpers des Hilfselements (24) gleitbar montiert ist und mit einem ersten Ende mit der Oberfläche der zweiten benachbarten Schaltstange (14) in Gleitkontakt steht, derart daß ein entgegengesetztes zweites Ende des Prüfelements (Z5) mit einer in der Oberfläche der ersten Schaltstange (16) vorgesehenen Refererenzkerbe (27) in Eingriff gehalten wird, um das Hilfselement (24) an der ersten Schaltstange (16) zu blockieren, wenn letztere zwischen ihrer neutralen Zwischenstellung und ihrer zweiten wirksamen Endstellung (RM) bewegt wird,

b) an dem Getriebegehäuse (2) eine Anschlagfläche (28) vorgesehen ist, an der das Hilfselement (24) anliegt, wenn die erste Schaltstange (16) sich in ihrer neutralen Zwischenstellung befindet und diederart ausgebildet ist, daß sie verhindert, daß das Hilfselement (24) sich zusammen mit der ersten Schaltstange (16) bewegt, wenn letztere aus ihrer neutralen Stellung in Richtung auf ihre erste wirksame Endstellung (V) gedrückt wird,

c) an der benachbarten zweiten Schaltstange (14) ein Sitz (29) vorgesehen ist, der dem Prüfelement (25) gegenüberliegt, wenn die erste Schaltstange (16) sich in ihrer neutralen Zwischenstellung befindet, und in welchem (29) elastische Mittel (31) angeordnet sind, die das Prüfelement (25) gegen die erste Schaltstange (16) vorspannen, wobei der Sitz (29) und die elastischen Mittel (31) so angeordnet sind, daß sie dann, wenn die erste Schaltstange (16) aus ihrer neutralen Zwischenstellung in Richtung ihrer ersten wirksamen Endstellung (V) gedrückt wird, bewirken, daß gleichzeitig

c1) das Prüfelement (25) aus dem Eingriff mit der in der ersten Schaltstange (16) vorgesehenen Refererenzkerbe (27) herausgeführt wird, wodurch die erste Schaltstange (16) wirksam aus ihren neutralen Stellung in ihre erste wirksame Endstellung (V) bewegt werden kann, und

c2) dasselbe Prüfelement (25) teilweise in den genannten Sitz (29) eingeführt und dadurch das Hilfselement (24) in der genannten festen axialen Position auf der zweiten benachbarten Schaltstange (14) blockiert wird.

2. Vorrichtung nach Anspruch 1, dadurch gekennzeichnet, daß ein Element (30) gleitbar in dem genannten Sitz (29) montiert und durch die federnden Mittel (31) gegen die erste Schaltstange (16) gedrückt wird.

## Revendications

1. Dispositif de commande (1) d'une boîte de vitesses pour des véhicules à moteur, comprenant:

- un carter de boîte (2),
- une première tige sélectrice (16) pour la commande sélective du passage d'une vitesse la plus haute et d'une marche arrière, cette tige sélectrice (16) étant axialement déplaçable entre une première position opérationnelle finale (V) correspondant au passage de la vitesse la plus haute, et une deuxième position opérationnelle finale (RM) correspondant à l'insertion de la marche arrière, et possédant également une position neutre intermédiaire entre ces deux positions opérationnelles finales (V, RM),

- une fourchette pour commander le passage de la vitesse la plus haute, dont le manchon (17) est fixé sur la première tige de sélection (16),

- un élément auxiliaire (24) pour commander le passage de la marche arrière, monté d'une manière librement coulissante sur la première tige de sélection (16),

- des moyens de blocage unidirectionnel (25, 26, 27, 28, 29, 31) pour bloquer l'élément auxiliaire (24) à une position axiale fixe sur la première tige de sélection (16) lorsque cette dernière est déplacée entre sa position neutre et sa deuxième position opérationnelle finale (RM), et pour bloquer l'élément auxiliaire (24) à une position axiale fixe par rapport à une deuxième tige de sélection voisine (14) de la boîte de vitesses, tout en autorisant un libre coulissement de la première tige de sélection (16) par rapport à l'élément auxiliaire (24), lorsque la première tige de sélection (16) est déplacée entre sa position neutre et sa première position opérationnelle finale (V), caractérisé en ce que:

a) les moyens de blocage unidirectionnel comprennent un élément de contrôle unique (25) monté coulissant dans un orifice traversant transversal (26) pratiqué dans le corps de l'élément auxiliaire (24), et possédant une première extrémité en contact coulissant avec la surface de la deuxième tige de sélection voisine (14), de sorte qu'une deuxième extrémité opposée de l'élément de contrôle (25) est maintenue en engagement dans une encoche de référence (27) pratiquée sur la surface de la première tige de sélection (16), afin de maintenir l'éiément auxiliaire (24) bloqué sur la première tige de sélection (16) lorsque cette dernière est déplacée entre sa position neutre et sa deuxième position opérationnelle finale (RM),

b) le carter de boîte (2) est muni d'une surface de butée (28) contre laquelle bute l'élément auxiliaire (24) lorsque la première tige de sélection (16) est à sa position neutre; la surface de butée (28) étant telle qu'elle empêche l'élément auxiliaire (24) de se déplacer solidairement avec la première tige de sélection (16) lorsque cette dernière est poussée, depuis sa position neutre, vers sa première position opérationnelle finale (V),

c) la deuxième tige de sélection voisine (14) possède un siège (29) qui, lorsque la première tige de sélection (16) est à sa position neutre, fait face à l'élément de contrôle (25), et un moyen élastique (31) est prévu à l'intérieur du siège (29) pour pousser l'élément de contrôle (25) contre la première tige de sélection (16); le siège (29) et le moyen élastique (31) étant disposés d'une manière telle que, lorsque la première tige de sélection (16) est poussée de sa position neutre vers sa première position opérationnelle finale (V), ils permettent simultanément:

c1) à l'élément de contrôle (25) d'être désengagé de l'encoche de référence (27) prévue dans la première tige de sélection (16), permettant ainsi à cette dernière d'être effectivement déplacée de sa position neutre à sa première position opérationnelle finale (V), et c2) à ce même élément de contrôle (25) d'être partiellement inséré dans le siège (29), bloquant ainsi l'élément auxiliaire (24) à la position axiale fixe précitée sur la deuxième tige de sélection voisine (14).

2. Dispositif selon la revendication I, caractérisé en ce qu'un élément (30) est monté coulissant dans le siège (26) et est poussé vers la première tige (16) par le moyen élastique (31).

FIG. 1

# FIG. 2